# EUROPÄISCHE PATENTSCHRIFT

(11) **EP 2 148 791 B1**
(45) Veröffentlichungstag und Bekanntmachung des Hinweises auf die Patenterteilung: **17.07.2013**
(21) Anmeldenummer: 08716420.8
(22) Anmeldetag: 11.03.2008
(51) Int. Cl.: B60K 13/04

(54) **ENDROHRBLENDENANORDNUNG UND HECKVERKLEIDUNG**
TAILPIPE COVER ARRANGEMENT AND REAR END TRIM
DISPOSITIF À ÉCRAN DE TUBE D'EXTRÉMITÉ ET REVÊTEMENT ARRIÈRE

(30) Priorität: 18.04.2007 DE 102007018191
(43) Veröffentlichungstag der Anmeldung: 03.02.2010
(73) Patentinhaber: Dr. Ing. h.c. F. Porsche AG, 70435 Stuttgart (DE)
(72) Erfinder: LUTZ, Stefan, 71665 Vaihingen (DE); SCHUBERT, Michael, 71254 Ditzingen (DE)
(86) Internationale Anmeldenummer: PCT/EP2008/001911
(87) Internationale Veröffentlichungsnummer: WO 2008/128603

(56) Entgegenhaltungen:
- EP-A- 1 428 743
- DE-A1- 19 502 085
- DE-A1- 19 940 102
- DE-A1-102004 003 672
- DE-C1- 10 140 435
- DE-U1-202006 017 798

## Beschreibung

Die Erfindung betrifft eine Endrohrblendenanordnung für ein Abgasendrohr eines Kraftfahrzeugs mit einer Endrohrblende. Die Erfindung betrifft auch eine Heckverkleidung für ein Kraftfahrzeug mit einem Heckverkleidungsteil.

Aus der DE 10 2004 003 672 A1 ist das Heck eines Kraftfahrzeugs bekannt, wobei das Heck eine Endeinheit aufweist, durch welche Abgase einer Abgasanlage hindurchgeführt werden, wobei ein Endrohr der Abgasanlage zu einer Ausnehmung in der Endeinheit hin ausgerichtet ist.

Die DE 101 40 435 C1 beschreibt eine Abgasanlage mit einer Endrohrvorrichtung, wobei die Endrohrvorrichtung benachbart zu einem Wandteil eines Aufbaus eines Kraftfahrzeugs verläuft. Das Wandteil ist als eine in die Heckverkleidung des Kraftfahrzeugs eingegliederte Blende ausgeführt welche als Hitzeschild für die Heckverkleidung ausgebildet ist.

Die Druckschrift EP 1 428 743 A2 zeigt ein Heckverkleidungsteil mit einer daran befestigten Abgasendrohrblende für eine Abgasanlage eines Kraftfahrzeugs, wobei das Heckverkleidungsteil mit einer vollständig umrandeten Durchtrittsöffnung versehen ist, durch die die Abgasendrohrblende hindurchtritt. Dabei ist der Durchlassquerschnitt der Abgasendrohrblende über deren gesamte Länge größer als der äußere Querschnitt des Endrohrs der Abgasanlage.

Aufgabe der vorliegenden Erfindung ist es, eine Endrohrblendenanordnung von hoher Wertigkeit bereitzustellen, wobei eine durch die Abgase bedingte übermäßige Aufwärmung eines Heckverkleidungsteils des Kraftfahrzeugs im Bereich der Endrohrblendenanordnung zuverlässiger als aus dem Stand der Technik bekannt vermieden wird.

Diese Aufgabe wird erfindungsgemäß gelöst durch die Merkmale des unabhängigen Patentanspruchs 1. Vorteilhafte Weiterbildungen der Erfindung sind Gegenstand der abhängigen Patentansprüche.

Eine Endrohrblendenanordnung der eingangs genannten Art weist erfindungsgemäß mindestens ein Einsatzteil auf, welches zur Anordnung zwischen der Endrohrblende und einem Heckverkleidungsteil, wobei das mindestens ein Einsatzteil zumindest teilweise aus einem hochtemperaturfesten Kunststoff besteht. Derart kann das Heckverkleidungsteil wirksam vor übermäßiger Aufwärmung und insbesondere vor wärmebedingter Deformation bzw. Beschädigung geschützt werden.

Zwischen dem auslassseitigen Umfang des Endrohrs und dem inneren Umfang der Endrohrblende ist ein sich in Fahrzeuglängsrichtung erstreckender Ringspalt vorgesehen. Dadurch wird unter anderem ein Ausgleich der Wärmelängendehnung der Abgasanlage ermöglicht.

Das Endrohrweist in seinem Auslassbereich einen umlaufenden Ansatz auf, wobei der sich in Fahrzeuglängsrichtung erstreckende Ringspalt zwischen diesem umlaufenden Ansatz des Endrohrs und dem inneren Umfang der Endrohrblende vorgesehen ist. Durch diese Anordnung kann die Sichtfuge zwischen dem Endrohr und der Endrohrblende kaschiert werden.

Um das Heckverkleidungsteil noch wirksamer vor schädigenden Wärmeeinflüssen zu schützen, kann das mindestens eine Einsatzteil vorzugsweise im Wesentlichen aus einem thermoplastischen Konstruktionswerkstoff auf Basis eines teilkristallinen partiell aromatischen Copolyamids bestehen.

Vorzugsweise kann das mindestens eine Einsatzteil zumindest teilweise aus Polyphthalamid bestehen.

Mit Vorteil kann das Material des mindestens einen Einsatzteils zumindest teilweise glasfaserverstärkt sein.

Mit Vorteil kann das mindestens eine Einsatzteil zumindest teilweise als Blendelement ausgebildet sein.

Vorzugsweise kann die Endrohrblende im Wesentlichen aus einem Metall oder einer Metallverbindung bestehen.

Mit Vorteil kann die Endrohrblende im Wesentlichen aus Aluminium oder aus einer Aluminiumlegierung bestehen.

Mit Vorteil kann die Endrohrblende im Wesentlichen aus einem Keramikwerkstoff bestehen.

Mit Vorteil können zur Verbindung der Endrohrblende und des mindestens einen Einsatzteils ein oder mehrere Nietverbindungen vorgesehen sein.

Der Schutz des Heckverkleidungsteils vor unerwünschten Wärmeeinflüssen kann weiter gesteigert werden, wenn zur Verbindung der Endrohrblende mit dem mindestens einen Einsatzteil ein oder mehrere Keramikelemente vorgesehen sind.

Mit Vorteil können das mindestens eine Einsatzteil und das Heckverkleidungsteil miteinander verklipst sein.

Mit Vorteil weist die Endrohrblendenanordnung ein Endrohr auf, welches gegenüber der Endrohrblende einen Freigang aufweist. Derart wird nicht nur der Schutz des Heckverkleidungsteils vor störenden Wärmeinflüssen verbessert, sondern auch das Risiko von Beschädigungen der Abgasanlage deutlich reduziert. Der Freigang ermöglicht, dass sich das Endrohr, welches beispielsweise durch Motorschwingungen erregt werden kann, innerhalb der Endrohranordnung bewegen kann.

Vorzugsweise kann das Endrohr einen Endrohrteiler aufweisen, dessen Stirnseite von der Endrohrblende zumindest im Wesentlichen nicht überdeckt wird.

Die der Erfindung zugrunde liegende Aufgabe wird auch gelöst durch eine Heckverkleidung für ein Kraftfahrzeug mit einem Heckverkleidungsteil und mit einer Endrohrblendenanordnung gemäß der Erfindung oder einer ihrer vorteilhaften Weiterbildungen, wobei das mindestens eine Einsatzteil zwischen der Endrohrblende und dem Heckverkleidungsteil angeordnet ist, wobei das mindestens eine Einsatzteil derart ausgebildet ist, dass die Endrohrblende und das Heckverkleidungsteil flächig voneinander abgeschirmt werden. Eine derartige Heckverkleidung ermöglicht einen wirksamen Toleranzausgleich für verschiedene Endrohrpositionen zur heckteilfesten Endrohrblende, wobei zudem ein zuverlässiger Sichtschutz durch die Endrohrblende bewirkt wird.

Weitere Einzelheiten und Vorteile der Erfindung werden nachfolgend beispielhaft unter Bezugnahme auf die Zeichnungen erläutert. Es zeigen, jeweils schematisch,
- Fig. 1: eine perspektivische Außenansicht eines Ausschnitts des Heckbereichs eines Kraftfahrzeugs mit einer Endrohrblendenanordnung,
- Fig. 2: einen Schnitt durch eine Endrohrblendenanordnung,
- Fig. 3: einen Schnitt durch eine Endrohrblendenanordnung,
- Fig. 4: eine perspektivische Ansicht eines Endrohrs ohne die eigentliche Blendenanordnung.

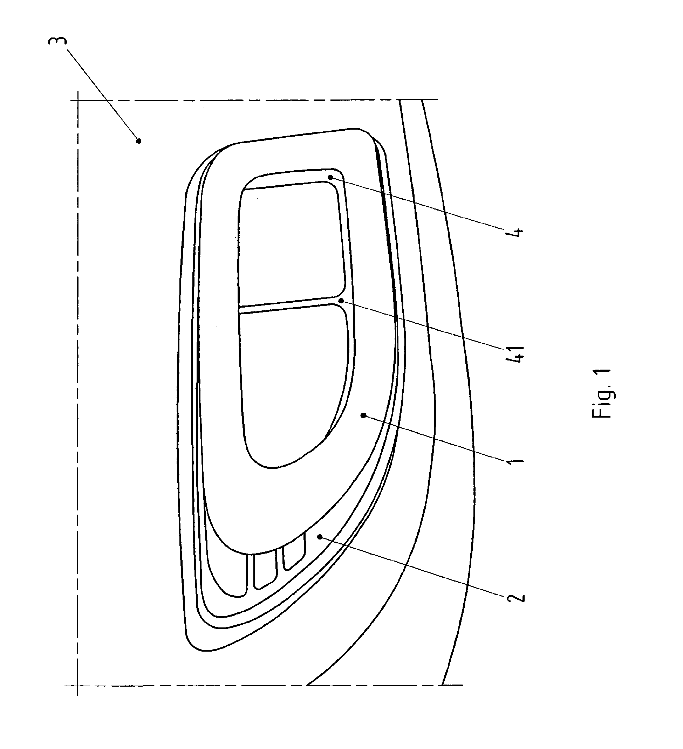

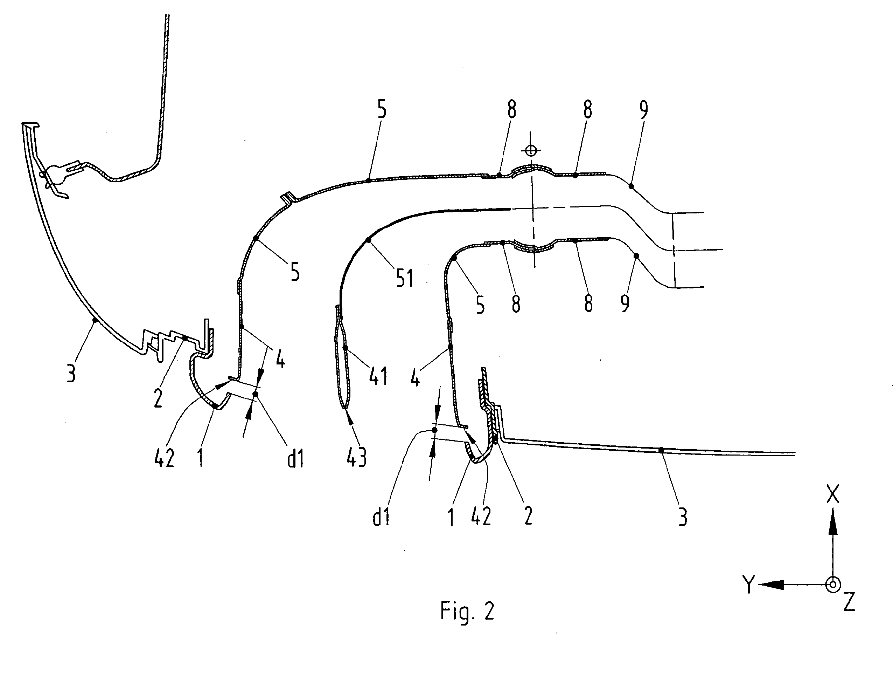

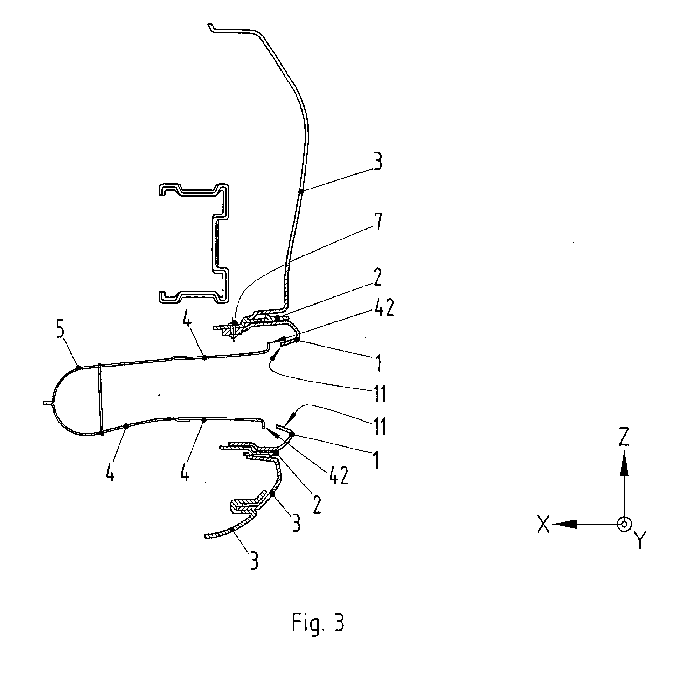

**Fig. 1** zeigt in perspektivischer Ansicht einen Ausschnitt des Heckbereichs eines Kraftfahrzeugs mit einer Endrohrblendenanordnung. Die Endrohrblendenanordnung ist im gezeigten Beispiel im Heckteil angeordnet. Die Endrohrblende 1 ist von einem Einsatzteil 2 umgeben, wobei das Einsatzteil 2 in ein Heckverkleidungsteil 3 des Kraftfahrzeugs eingesetzt ist. Hinter der Endrohrblende 1 ist ein Endrohr angeordnet, durch welches die Abgase einer Abgasanlage des Kraftfahrzeugs geleitet werden. Das Endrohr weist ein Endstück 4 auf, welches zumindest teilweise von der Endrohrblende 1 verdeckt wird. Das Einsatzteil 2 schirmt das Heckverkleidungsteil 3 und das Endstück 4 des Endrohrs thermisch voneinander ab. Gleichzeitig erfüllt das Einsatzteil 2 die Funktion einer Sichtblende. Das Endstück 4 des Endrohrs weist einen Endrohrteiler 41 auf, welcher den das Endrohr durchströmenden Abgasstrom aufteilt. Die Endrohrblende 1 überdeckt den äußeren Umfang des dem Fahrzeugheck zugewandten Endstücks 4 des Endrohrs bei Betrachtung in Fahrzeuglängsrichtung x (siehe Fig. 2 und 3) zumindest weitestgehend ab. Die Durchsicht in eine ansonsten entstehende Fuge kann so verhindert werden. Dabei bleibt der Endrohrteiler 41 bei Betrachtung in Fahrzeuglängsrichtung x jedoch im Wesentlichen sichtbar.

Das Koordinatensystem in den **Fig. 2** **und** **3** bezeichnet die Fahrzeuglängsrichtung x, die Fahrzeugquerrichtung y und die Höhenrichtung z.

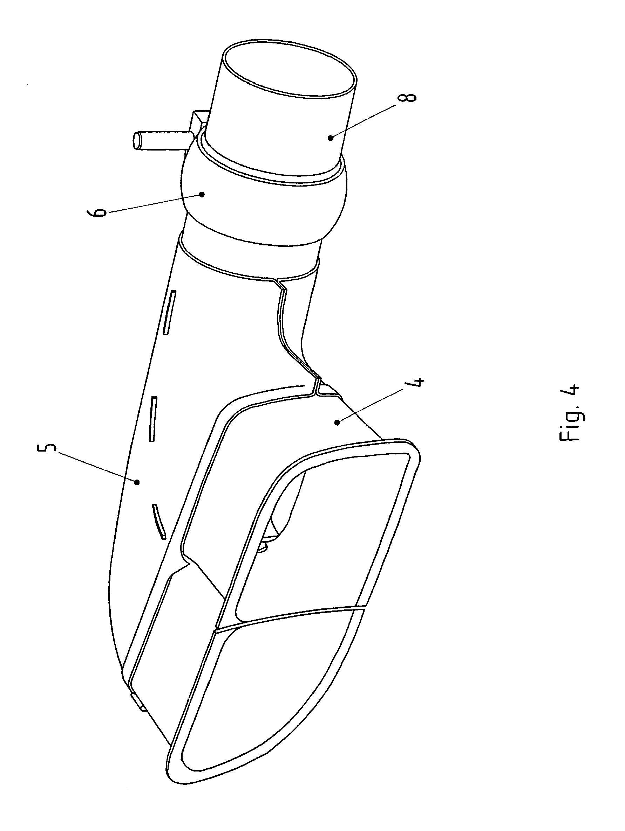

**Fig. 2** zeigt einen Schnitt durch die Endrohranordnung. Das Endrohr weist ein auf eine Auslassöffnung im Bereich des Fahrzeughecks ausgerichtetes Endstück 4 auf, welches mit einem gekrümmten Verteilerstück 5 des Endrohrs verbunden ist. Mit dem Verteilerstück 5 verbunden ist ein Teilstück 8, welches einen in der Zeichnung lediglich angedeuteten Anschluss 9 zur eigentlichen Abgasanlage des Kraftfahrzeugs aufweist. Im Bereich des der eigentlichen Abgasanlage zugewandten Teilstücks 8 des Endrohrs kann eine beispielsweise eine Kugelschelle aufweisende Befestigungsvorrichtung 6 (siehe Fig. 4) vorgesehen sein. Der das Endrohr durchströmende Abgasstrom wird durch Endrohrteiler 41, 51 im Bereich des Endstücks 4 und des Verteilerstücks 5 aufgeteilt. Das Endstück 4 des Endrohrs weist in seinem dem Fahrzeugheck zugewandeten Bereich einen umlaufenden Ansatz 42 auf. Dieser Ansatz 42 weist umlaufend einem Abstand d₁ zur Endrohrblende 1 auf. Derart wird ein sich in Fahrzeuglängsrichtung x erstreckender Ringspalt zwischen dem umlaufenden Ansatz 42 des Endrohrs und dem inneren Umfang der Endrohrblende 1 ausgebildet. Betrachtet man das Kraftfahrzeug in Fahrzeuglängsrichtung x, so überdeckt die Endrohrblende 1 den umlaufenden Ansatz 42 des Endrohrs zumindest weitestgehend. Insbesondere die Stirnseite 43 des Endrohrteilers 41 des Endstücks 4 des Endrohrs wird im gezeigten Beispiel von der Endrohrblende im Wesentlichen nicht überdeckt. Das Heckverkleidungsteil 3 wird mittels eines die Endrohrblende 1 ringförmig umgebenden Einsatzteils 2 von der Endrohrblende 1 abgeschirmt. Das Einsatzteil 2 bewirkt einerseits eine thermische Abschirmung des Heckverkleidungsteils 3 von der Endrohrblende 1 und dem Endrohr. Andererseits erfüllt das Einsatzteil 2 zumindest teilweise eine Blendenfunktion.

**Fig. 3** zeigt einen zu der in Fig. 2 gezeigten Ansicht senkrecht stehenden Schnitt durch die Endrohranordnung. In Fahrzeuglängsrichtung x gesehen, hinter der Endrohrblende 1 angeordnet, befindet sich das Endrohr mit dem Endstück 4 und dem Verteilerstück 5. Zwischen dem inneren Umfang 11 der Endrohrblende 1 und dem umlaufenden Ansatz 42 des Endstücks 4 erstreckt sich ein umlaufender Ringspalt. Der Abstand des Endstücks 4 des Endrohrs zu der Endrohrblende 1 ermöglicht einen Freigang des Endrohrs (siehe auch Abstand d₁ in Fig. 2). Derart kann ein direkter Wärmeübergang vom Endstück 4 des Endrohrs auf die Endrohrblende 1 besonders zuverlässig unterbunden werden. Auch die Übertragung mechanischer Spannungen kann derart weitestgehend vermieden werden. Das Einsatzteil 2 erstreckt sich zwischen der Endrohrblende 1 und dem Heckverkleidungsteil 3 und entkoppelt die Endrohrblende 1 und das Heckverkleidungsteil 3 thermisch voneinander. Durch das Einsatzteil 2 erfolgt eine flächige Abschirmung des Heckverkleidungsteils 3 von der Endrohrblende 1 und von dem heckseitigen Bereich des Endstücks 4 des Endrohrs. Das Einsatzteil 2 ist im gezeigten Beispiel mit dem Heckverkleidungsteil 3 verklipst. Zwischen dem Einsatzteil 2 und der Endrohrblende 1 sind ein oder mehrere Verbindungsvorrichtungen 7 vorgesehen. Die Verbindung zwischen dem Einsatzteil 2 und der Endrohrblende 1 kann als Nietverbindung ausgebildet sein. Um die Wärmeisolation zu verbessern, kann die Befestigungsvorrichtung 7 ein vorzugsweise als Stift ausgebildetes Keramikelement aufweisen, welches das Einsatzteil 2 und die Endrohrblende 1 wie in Fig. 3 angedeutet durchdringt und durch ein nicht näher dargestelltes Klemmelement, z.B. einen Blechhalter, gehalten wird. Als Verbindung zwischen dem Einsatzteil 2 und der Endrohrblende 1 kann auch eine Schraubverbindung vorgesehen sein.

**Fig. 4** zeigt das Endrohr ohne die Endrohrblende 1 (siehe Fig. 1 bis 3) in perspektivischer Darstellung. Es schließen sich aneinander an das Endstück 4, das Verteilerstück 5 und das Teilstück 8, welches über eine Befestigungsvorrichtung 6, welche z.B. eine Kugelschelle aufweisen kann, mit der Abgasanlage des Kraftfahrzeugs verbunden ist.

Die in den **Fig. 1 bis 3** gezeigte Endrohrblende 1 kann im Wesentlichen aus einem Metall oder einer Metallverbindung bestehen, beispielsweise aus einem Leichtmetall oder aus einem Übergangsmetall bzw. aus einer Leichtmetallverbindung oder aus einer Übergangsmetallverbindung. Die Endrohrblende 1 kann auch aus einem Keramikwerkstoff bestehen. Das Einsatzteil 2 (siehe Fig. 1 bis 3) besteht zumindest teilweise aus einem hochtemperaturfesten Kunststoff, beispielsweise aus einem thermoplastischen Kunststoffwerkstoff auf Basis eines teilkristallinen partiell aromatischen Copolyamids. Derart wird eine hohe Leistungsfähigkeit und die Wärmeformbeständigkeit des Einsatzteils 2 auch bei hohen Anwendungstemperaturen sichergestellt.

## Patentansprüche

1. Endrohrblendenanordnung für ein Abgasendrohr eines Kraftfahrzeugs mit einer Endrohrblende (1), **dadurch gekennzeichnet, dass** die Endrohrblendenanordnung ein Abgasendrohr (5) und mindestens ein Einsatzteil (2) aufweist, welches zur Anordnung zwischen der Endrohrblende (1) und einem Heckverkleidungsteil (3) des Kraftfahrzeugs ausgebildet ist, und welches zumindest teilweise aus einem hochtemperaturfesten Kunststoff besteht, und dass zwischen einem auslassseitigen Umfang eines Endrohrs und einem inneren Umfang der Endrohrblende (1) ein sich in Fahrzeuglängsrichtung (x) erstreckender Ringspalt vorgesehen ist, wobei das Endrohr in seinem Auslassbereich einen umlaufenden Ansatz (42) aufweist, wobei der sich vom umlaufenden Ansatz (42) in Fahrzeuglängsrichtung (x) erstreckende Ringspalt zwischen diesem umlaufenden Ansatz (42) des Endrohrs und dem inneren Umfang der Endrohrblende (1) vorgesehen ist.

2. Endrohrblendenanordnung nach Patentanspruch 1, wobei das mindestens eine Einsatzteil (2) im Wesentlichen aus einem thermoplastischen Konstruktionswerkstoff auf Basis eines teilkristallinen partiell aromatischen Copolyamids besteht.

3. Endrohrblendenanordnung nach Patentanspruch 1 oder 2, wobei das mindestens eine Einsatzteil (2) zumindest teilweise aus Polyphthalamid besteht.

4. Endrohrblendenanordnung nach einem der Patentansprüche 1 bis 3, wobei das Material des mindestens einen Einsatzteils (2) zumindest teilweise Glasfaser verstärkt ist.

5. Endrohrblendenanordnung nach einem der Patentansprüche 1 bis 4, wobei das mindestens eine Einsatzteil (2) zumindest teilweise als Blendelement ausgebildet ist.

6. Endrohrblendenanordnung nach einem der Patentansprüche 1 bis 5, wobei die Endrohrblende (1) im Wesentlichen aus einem Metall oder einer Metallverbindung besteht.

7. Endrohrblendenanordnung nach Patentanspruch 6, wobei die Endrohrblende (1) im Wesentlichen aus Aluminium oder einer Aluminiumlegierung besteht.

8. Endrohrblendenanordnung nach einem der Patentansprüche 1 bis 5, wobei die Endrohrblende (1) im Wesentlichen aus einem Keramikwerkstoff besteht.

9. Endrohrblendenanordnung nach einem der Patentansprüche 1 bis 8, wobei zwischen der Endrohrblende (1) und dem mindestens einen Einsatzteil (2) eine Nietverbindung vorgesehen ist.

10. Endrohrblendenanordnung nach einem der Patentansprüche 1 bis 8, wobei zur Verbindung der Endrohrblende (1) mit dem mindestens einen Einsatzteil (2) mindestens ein Keramikelement vorgesehen ist.

11. Endrohrblendenanordnung nach einem der Patentansprüche 1 bis 10, wobei das mindestens eine Einsatzteil (2) und das Heckverkleidungsteil (3) miteinander verklipst sind.

12. Endrohrblendenanordnung nach einem der Patentansprüche 1 bis 11, wobei das Endrohr einen Endrohrteiler (41, 51) aufweist, dessen Stirnseite (43) von der Endrohrblende (1) zumindest im Wesentlichen nicht überdeckt wird.

13. Heckverkleidung für ein Kraftfahrzeug mit einem Heckverkleidungsteil (3) und mit einer Endrohrblendenanordnung nach einem der Patentansprüche 1 bis 12, wobei das mindestens eine Einsatzteil (2) zwischen der Endrohrblende (1) und dem Heckverkleidungsteil (3) angeordnet ist, wobei das mindestens eine Einsatzteil (2) derart ausgebildet ist, dass die Endrohrblende (1) und das Heckverkleidungsteil (3) flächig voneinander abgeschirmt werden.

## Claims

1. Tailpipe cover arrangement for an exhaust tailpipe of a motor vehicle, with a tailpipe cover (1), **characterized in that** the tailpipe cover arrangement has an exhaust tailpipe (5) and at least one insert (2) which is designed for arranging between the tailpipe cover (1) and a rear end trim panel (3) of the motor vehicle and which at least partially consists of a plastic which is stable at high temperatures, and **in that** an annular gap extending in the longitudinal direction (x) of the vehicle is provided between an outlet-side circumference of a tailpipe and an inner circumference of the tailpipe cover (1), wherein the tailpipe has a peripheral lug (42) in the outlet region thereof, wherein the annular gap extending in the longitudinal direction (x) of the vehicle from the peripheral lug (42) is provided between said peripheral lug (42) of the tailpipe and the inner circumference of the tailpipe cover (1).

2. Tailpipe cover arrangement according to Patent Claim 1, wherein the at least one insert (2) substantially consists of a thermoplastic construction material on the basis of a partially crystalline, partially aromatic copolyamide.

3. Tailpipe cover arrangement according to Patent Claim 1 or 2, wherein the at least one insert (2) at least partially consists of polyphthalamide.

4. Tailpipe cover arrangement according to one of Patent Claims 1 to 3, wherein the material of the at least one insert (2) is at least partially glass-fibre-reinforced.

5. Tailpipe cover arrangement according to one of Patent Claims 1 to 4, wherein the at least one insert (2) is at least partially designed as a cover element.

6. Tailpipe cover arrangement according to one of Patent Claims 1 to 5, wherein the tailpipe cover (1) substantially consists of a metal or a metal compound.

7. Tailpipe cover arrangement according to Patent Claim 6, wherein the tailpipe cover (1) substantially consists of aluminium or an aluminium alloy.

8. Tailpipe cover arrangement according to one of Patent Claims 1 to 5, wherein the tailpipe cover (1) substantially consists of a ceramic material.

9. Tailpipe cover arrangement according to one of Patent Claims 1 to 8, wherein a rivet connection is provided between the tailpipe cover (1) and the at least one insert (2).

10. Tailpipe cover arrangement according to one of Patent Claims 1 to 8, wherein at least one ceramic element is provided for connecting the tailpipe cover (1) to the at least one insert (2).

11. Tailpipe cover arrangement according to one of Patent Claims 1 to 10, wherein the at least one insert (2) and the rear end trim panel (3) are clipped to each other.

12. Tailpipe cover arrangement according to one of Patent Claims 1 to 11, wherein the tailpipe has a tailpipe divider (41, 51), the end side (43) of which is at least substantially not overlapped by the tailpipe cover (1).

13. Rear end trim for a motor vehicle, with a rear end trim panel (3) and with a tailpipe cover arrangement according to one of Patent Claims 1 to 12, wherein the at least one insert (2) is arranged between the tailpipe cover (1) and the rear end trim panel (3), wherein the at least one insert (2) is designed in such a manner that the tailpipe cover (1) and the rear end trim panel (3) are shielded from each other in a planar manner.

## Revendications

1. Dispositif à écran de tube d'extrémité pour un tube d'extrémité de gaz d'échappement d'un véhicule automobile comprenant un écran de tube d'extrémité (1), **caractérisé en ce que** le dispositif à écran de tube d'extrémité présente un tube d'extrémité de gaz d'échappement (5) et au moins une partie d'insertion (2) qui est réalisée pour être agencée entre l'écran de tube d'extrémité (1) et une partie d'habillage arrière (3) du véhicule automobile, et qui se compose au moins en partie d'un plastique résistant aux hautes températures, et **en ce qu'**entre une périphérie du côté de la sortie d'un tube d'extrémité et une périphérie intérieure de l'écran de tube d'extrémité (1) est prévu un interstice annulaire s'étendant dans la direction longitudinale du véhicule (x), le tube d'extrémité présentant dans sa région de sortie un épaulement périphérique (42), l'interstice annulaire s'étendant depuis l'épaulement périphérique (42) dans la direction longitudinale du véhicule (x) étant prévu entre cet épaulement périphérique (42) du tube d'extrémité et la périphérie intérieure de l'écran de tube d'extrémité (1).

2. Dispositif à écran de tube d'extrémité selon la revendication 1, dans lequel l'au moins une partie d'insertion (2) se compose essentiellement d'un matériau de construction thermoplastique à base d'un copolyamide partiellement cristallin partiellement aromatique.

3. Dispositif à écran de tube d'extrémité selon la revendication 1 ou 2, dans lequel l'au moins une pièce d'insertion (2) se compose au moins en partie de polyphtalamide.

4. Dispositif à écran de tube d'extrémité selon l'une quelconque des revendications 1 à 3, dans lequel le matériau de l'au moins une partie d'insertion (2) est au moins en partie renforcé par des fibres de verre.

5. Dispositif à écran de tube d'extrémité selon l'une quelconque des revendications 1 à 4, dans lequel l'au moins une partie d'insertion (2) est réalisée au moins en partie sous forme d'élément d'écran.

6. Dispositif à écran de tube d'extrémité selon l'une quelconque des revendications 1 à 5, dans lequel l'écran de tube d'extrémité (1) se compose essentiellement d'un métal ou d'un composé métallique.

7. Dispositif à écran de tube d'extrémité selon la revendication 6, dans lequel l'écran de tube d'extrémité (1) se compose essentiellement d'aluminium ou d'un alliage d'aluminium.

8. Dispositif à écran de tube d'extrémité selon l'une quelconque des revendications 1 à 5, dans lequel l'écran de tube d'extrémité (1) se compose essentiellement d'un matériau en céramique.

9. Dispositif à écran de tube d'extrémité selon l'une quelconque des revendications 1 à 8, dans lequel une connexion rivetée est prévue entre l'écran de tube d'extrémité (1) et l'au moins une partie d'insertion (2).

10. Dispositif à écran de tube d'extrémité selon l'une quelconque des revendications 1 à 8, dans lequel pour la connexion de l'écran de tube d'extrémité (1) à l'au moins une partie d'insertion (2), on prévoit au moins un élément en céramique.

11. Dispositif à écran de tube d'extrémité selon l'une quelconque des revendications 1 à 10, dans lequel l'au moins une pièce d'insertion (2) et la partie d'habillage arrière (3) sont enclipsées l'une à l'autre.

12. Dispositif à écran de tube d'extrémité selon l'une quelconque des revendications 1 à 11, dans lequel le tube d'extrémité présente un diviseur de tube d'extrémité (41, 51) dont le côté frontal (43) n'est au moins essentiellement pas recouvert par l'écran de tube d'extrémité (1).

13. Habillage arrière pour un véhicule automobile comprenant une partie d'habillage arrière (3) et un dispositif à écran de tube d'extrémité selon l'une quelconque des revendications 1 à 12, dans lequel l'au moins une partie d'insertion (2) est disposée entre l'écran de tube d'extrémité (1) et la partie d'habillage arrière (3), l'au moins une partie d'insertion (2) étant réalisée de telle sorte que l'écran de tube d'extrémité (1) et la partie d'habillage arrière (3) soient masqués l'un de l'autre à plat.
